# EUROPEAN PATENT SPECIFICATION

(11) **EP 2 060 455 B1**
(45) Date of publication and mention of the grant of the patent: **08.08.2012**
(21) Application number: 08019108.3
(22) Date of filing: 31.10.2008
(51) Int. Cl.: B60T 7/22, B60W 30/08

(54) **Vehicle control device, vehicle control method, and computer program**
Fahrzeugsteuerungsvorrichtung, Fahrzeugsteuerungsverfahren und Computerprogramm
Dispositif de contrôle de véhicule, procédé de contrôle de véhicule, et programme informatique

(30) Priority: 16.11.2007 JP 2007298079; 18.03.2008 JP 2008068946; 28.03.2008 JP 2008086132
(43) Date of publication of application: 20.05.2009
(73) Proprietor: Aisin AW Co., Ltd., Fujii-cho Anjo-shi, Aichi 444-1192 (JP)
(72) Inventor: Kondou, Yoshito, Okazaki-shi Aichi 444-8564 (JP); Miyajima, Takayuki, Okazaki-shi Aichi 444-8564 (JP); Takeuchi, Atsushi, Okazaki-shi Aichi 444-8564 (JP); Yasui, Yoshiyuki, Aichi 448-8688 (JP); Kodama, Hiroyuki, Aichi 448-8688 (JP)
(74) Representative: Kramer - Barske - Schmidtchen

(56) References cited:
- JP-A- 2004 237 813
- JP-A- 2005 138 623
- JP-A- 2007 034 988
- US-A1- 2004 145 238
- US-A1- 2004 155 811
- US-A1- 2004 193 374
- US-B1- 6 353 788

## Description

The present invention relates to a vehicle control device, a vehicle control method, and a computer program that perform an appropriate vehicle control when an object is detected ahead.

Vehicle control devices have been proposed in the past for obtaining various information regarding vehicle travel such as a current position identified by GPS or the like and road information obtained from map data in a navigation device, as well as for providing driver notification and driving assistance, and for intervening with driving to prevent a vehicle accident. This type of vehicle control device performs a vehicle control at diverse timings and based on various conditions. In particular, when an object such as another vehicle ahead is detected during vehicle travel, in order to avoid contact with the object or mitigate damage upon contact, the vehicle control device performs braking to decelerate and turn the vehicle around.

Japanese Patent Application Publication No. JP-A-2007-145152 (pages 6 to 7, FIGS. 4 to 6), for example, describes art for performing a braking control, wherein based on a vehicle speed of a host vehicle, a speed of an object ahead of the host vehicle, and a positional relationship between the host vehicle and the object, it is determined whether contact with the object can be avoided by steering the host vehicle. If it is determined that contact with the object cannot be avoided by steering, then the braking control decelerates the vehicle.

In cases where the host vehicle is approaching an object ahead, the following two methods can be used in order to avoid contact with the object.
(1) Maintain a distance from the object without contacting the object by performing host vehicle braking while keeping the current direction of vehicle travel.
(2) Perform an avoidance maneuver by steering to change the travel direction of the host vehicle and moving the vehicle to the right or left of the object.
   Comparing the above methods (1) and (2), in order to avoid contact with the object according to method (1), the driver must initiate a vehicle operation in order to avoid impact at a faster timing than that required to avoid contact with the object according to method (2).

According to the vehicle control device described in Japanese Patent Application Publication No. JP-A-2007-145152, if it is determined that contact with an object is unavoidable even with method (2), namely, if contact with an object cannot be avoided regardless of any vehicle operation performed, then a braking control is initiated. In related art it is further determined whether contact with the object is avoidable according to method (2), based on the relative speed and the positional relationship between the host vehicle and the object as described above, that is, based only on relative relationships between the host vehicle and the object.

However, the vehicle cannot avoid an object ahead by moving into the right or left adjacent lane if conditions do not allow such an avoidance maneuver, such as when there is no adjacent lane next to the lane in which the vehicle is traveling, or if there is an adjacent lane next to the lane in which the vehicle is traveling, but there is another object (e.g. a traveling vehicle) in the adjacent lane. If a determination is made based solely on a relative relationship between the host vehicle and the object as in the related art, then it is impossible to determine that the vehicle is in a situation where contact with the object cannot be avoided by steering as described above.

US 2004/0155811 A1, considered as the closest prior art, discloses a motor vehicle driving aid system comprising a vehicle speed obtaining unit, an object distance obtaining unit, a collision judgment unit, an avoidance judgment unit and a braking control unit. The system causes activation of brake actuators for performing an automatic emergency braking of the vehicle, when the relative distance between the motor vehicle and an obstacle ahead is comprised between a first predetermined limit value which is equal to the minimum value at which it is still possible to avoid collision by braking and a preselected intermediate value, comprised between said first limit value and a second limit value, which is less than the first limit value and is equal to the minimum value of the relative distance at which it is still possible to follow a path avoiding the obstacle, or when said relative distance becomes less than said second limit value.

US 2004/0145238 A1 discloses a braking control device which performs a steering and/or avoidance possibility determination based on the state of the vehicle to execute automatic vehicle braking when an obstacle in front of the vehicle cannot be avoided by steering and/or braking. The device determines that the obstacle can be avoided by steering when the correlation value between the steering avoidance time and relative velocity is smaller than the distance from the vehicle to the obstacle. The steering avoidance time is set to a shorter value when the suspension characteristic is stiffer and the side base force generated by the front wheels is larger. The steering avoidance time is set successively shorter for low, high, and medium speed travel regions, respectively, to reflect the behaviour response characteristic of the vehicle with respect to the steering input. The vehicle deceleration that would occur if the driver released the accelerator pedal is considered in the braking avoidance possibility determination.

Further vehicle control device are known from US 6,353,788 B1, US 2004/193374 A1, JP 2004 237813A, JP 2005 138623A, and JP 2007 034988A.

The present invention was devised in order to resolve problems with the above related art, and it is an object of the present invention to provide a vehicle control device, a vehicle control method, and a computer program, which are capable of determining whether a vehicle is in a situation where contact with an object cannot be avoided through steering by using information pertaining to an adjacent lane and consequently reducing an impact upon contact with the object.

According to a vehicle control device of a first aspect of the present invention, using information pertaining to adjacent lanes makes it possible to determine situations where contact with an object is unavoidable through steering, i.e., whether the vehicle is in a situation where contact with an object cannot be avoided regardless of any vehicle operation subsequently performed. As a consequence, the timing at which the braking control is initiated can be advanced, making it possible to reduce an impact upon contact with an object.

According to the vehicle control device of a second aspect of the present invention, it is possible to determine whether contact with an object can be avoided through steering depending on whether there is an adjacent lane and whether there is another object positioned in the adjacent lane, and such a determination can be performed more accurately and faster than in the past.

According to a vehicle control method of a third aspect of the present invention, using information pertaining to adjacent lanes makes it possible to determine situations where contact with an object is unavoidable through steering, i.e., whether the vehicle is in a situation where contact with an object cannot be avoided regardless of any vehicle operation subsequently performed. As a consequence, the timing at which the braking control is initiated can be advanced, making it possible to reduce an impact upon contact with an object.

According to a computer program of a fourth aspect of the present invention, using information pertaining to adjacent lanes makes it possible for a computer to determine situations where contact with an object is unavoidable through steering, i.e., whether the vehicle is in a situation where contact with an object cannot be avoided regardless of any vehicle operation subsequently performed. As a consequence, the timing at which the braking control is initiated can be advanced, making it possible to reduce an impact upon contact with an object.
FIG 1 is a schematic configuration diagram of a vehicle control device according to an embodiment of the present invention;
FIG 2 is a block diagram schematically showing a control system of a navigation device according to the present embodiment;
FIG 3 is a flowchart of a vehicle control processing program executed by the vehicle control device according to the present embodiment;
FIG 4 is a flowchart of a subroutine program in anti-collision control processing executed by the vehicle control device according to the present embodiment;
FIG 5 is a flowchart of a subroutine program in control type determination processing executed by the vehicle control device according to the present embodiment;
FIG 6 is a flowchart of a subroutine program in end determination processing executed by the vehicle control device according to the present embodiment;
FIG 7 is a drawing showing an example where it is determined that a host vehicle may collide with a preceding vehicle;
FIG 8 is a drawing showing an example where it is determined that a host vehicle will not collide with a preceding vehicle;
FIG 9 is a drawing showing an example where it is determined that a collision with a preceding vehicle cannot be avoided through a steering operation;
FIG 10 is a drawing showing an example where it is determined that a collision with a preceding vehicle cannot be avoided through a steering operation; and
FIG 11 is a drawing showing an example where it is determined that a collision with a preceding vehicle can be avoided through a steering operation.

A vehicle control device according to the present invention will be described in detail below based on embodiments realizing the present invention and with reference to the drawings.

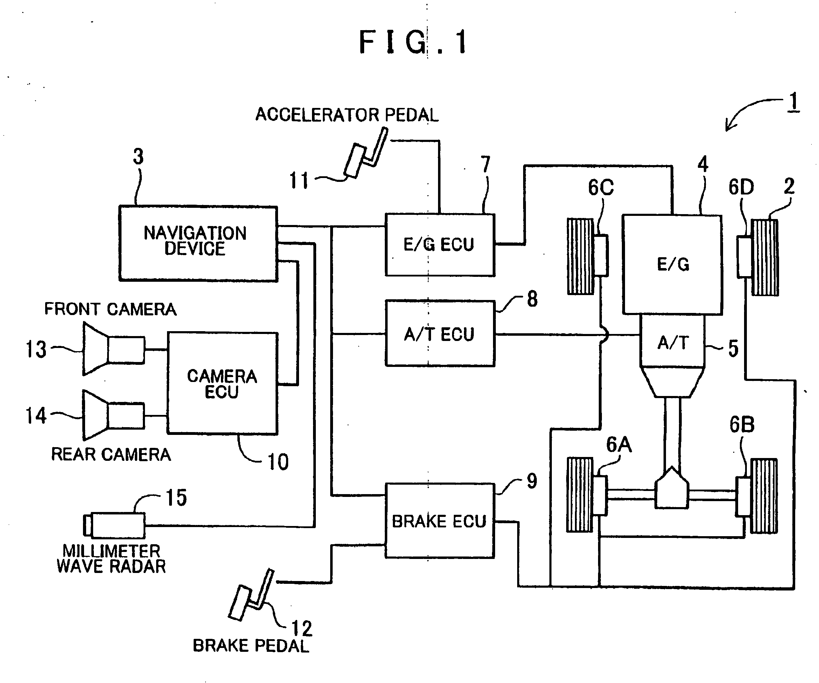

A schematic configuration of a vehicle control device 1 according to an embodiment will be explained first using FIG 1. FIG 1 is a schematic configuration diagram of the vehicle control device 1 according to the present embodiment.

As illustrated in FIG 1, the vehicle control device 1 according to the present embodiment is structured from a navigation device 3, an engine 4, an automatic transmission (AT) 5, brakes 6A to 6D, an engine ECU 7, and an AT ECU 8, a brake ECU 9, a camera ECU 10, an accelerator pedal 11, a brake pedal 12, a front camera 13, a rear camera 14, millimeter wave radars 15, 15 and the like installed in a vehicle 2.

Here, the navigation device 3 is provided in a center console or panel screen in the interior of the vehicle 2. The navigation device 3 is equipped with a liquid crystal display that shows a map or a search route to a destination, and a speaker that outputs voice guidance related to route guidance. In addition to identifying a current position of the vehicle 2 using GPS or the like, if a destination is set, the navigation device 3 also searches for a route to the destination and performs guidance in accordance with a set route using the liquid crystal display and the speaker. Furthermore, the navigation device 3 according to the present embodiment performs a vehicle control (specifically, down-shifting the AT or not shifting the AT) that enables the most appropriate avoidance maneuver when an anti-collision control (described later) is performed. The navigation device 3 also performs a vehicle braking control for reducing an impact upon collision (specifically, shifting down the AT and increasing a brake pressure generated by the brakes 6A to 6D). The navigation device 3 will be described in more detail later.

The engine 4 is an internal combustion engine or the like driven by a fuel such as gasoline, diesel, or ethanol, and is used as a drive source of the vehicle 2. An engine torque that is the driving force of the engine 4 is transmitted to a vehicle wheel via the AT 5, a propeller shaft, and a drive shaft, thereby driving the vehicle 2.

The AT 5 is a transmission provided with a function for automatically changing a transmission gear ratio depending on a speed and an engine rpm. The AT 5 shifts the engine torque generated by the engine 4 and transmits the shifted torque to the propeller shaft. Note that in the present embodiment, either a shift-down control that increases a transmission gear ratio or a shift-hold control that fixes the transmission gear ratio are performed in the anti-collision control described later. Furthermore, the AT 5 may be a continuously variable transmission (CVT).

The brakes 6A to 6D are respectively provided corresponding to vehicle wheels disposed at the front and rear, and right and left sides of the vehicle 2, and are mechanisms that use friction to decrease a rotational speed of the vehicle wheels. Note that types of brakes include a drum brake and a disc brake.

The engine electronic control unit (ECU) 7 includes a CPU, a RAM, and a ROM (not shown), and is an electronic control unit that performs a control of the engine 4. The engine ECU 7 is connected with the navigation device 3 and the accelerator pedal 11. Based on operation of the accelerator pedal 11, the engine ECU 7 controls an opening amount or the like of a throttle valve of the engine 4.

The AT ECU 8 includes a CPU, a RAM, and a ROM (not shown), and is an electronic control unit that performs a control of the AT 5. The AT ECU 8 is connected with the navigation device 3. Based on a command signal from the navigation device 3, the AT ECU 8 controls a transmission gear ratio and the like of the AT.

The brake ECU 9 includes a CPU, a RAM, and a ROM (not shown), and is an electronic control unit that performs a control of the brakes 6A to 6D. The brake ECU 9 is connected with the navigation device 3 and the brake pedal 12. Based on a command signal from the navigation device 3 or operation of the brake pedal 12, the brake ECU 9 controls a braking amount or the like generated by the brakes 6A to 6D.

The camera ECU 10 includes a CPU, a RAM, and a ROM (not shown), and is an electronic control unit that performs a control of the front camera 13 and the rear camera 14.

The accelerator pedal 11 is provided on a driver seat side in the interior of the vehicle 2, and is operated by the driver. When the driver operates the accelerator pedal 11, a depressed amount of the accelerator pedal 11 is sent to the engine ECU 7, which adjusts an opening amount of the throttle valve.

The brake pedal 12 is similarly provided on the driver seat side in the interior of the vehicle 2, and is operated by the driver. When the driver operates the brake pedal 12, a depressed amount of the brake pedal 12 is sent to the brake ECU 9, which adjusts the braking amount.

The front camera 13 and the rear camera 14 use a solid-state image sensor such as a CCD, for example, and are attached near a central upper region of license plates mounted at the front and rear of the vehicle 2. The front camera 13 and the rear camera 14 are installed such that a line of sight thereof faces a predetermined angle downward with respect to a horizontal level. During travel, an area ahead of the vehicle that is a travel direction of the vehicle 2 and an area behind the vehicle that is a reverse direction are respectively imaged. The vehicle control device 1 detects surrounding road conditions of the vehicle 2, as well as center dividers and road markings such as lane markers that define lanes formed on the road surface around the vehicle 2, from images taken by the front camera 13 and the rear camera 14 as described later. Based on the detected lane marker and center divider, a lane in which the vehicle 2 is currently traveling (hereinafter referred to as a travel lane) is identified (e.g. the vehicle 2 traveling in the leftmost lane or the vehicle 2 traveling in the second lane from the right is identified). Note that the lane marker includes a road center line, a lane boundary line, a lane edge, a line indicating a pedestrian crosswalk, and the like.

The millimeter wave radar 15 is an objection detection sensor whose recognition range encompasses a predetermined range around the vehicle (e.g. a range of 100 meters in front of and behind the vehicle 2), and is installed at a total of four locations: near the right and left door mirrors and near the central upper region of the license plates mounted at the front and back of the vehicle 2. Here, the millimeter wave radar 15 is formed from a radio wave sender and a radio wave receiver. The millimeter wave radar 15 radiates a millimeter wave and receives a radio wave reflected from an object. The vehicle control device 1 measures a position of an object and a speed of the object relative to the host vehicle based on a difference in frequency generated by a propagation time and the Doppler effect. Note that the vehicle control device 1 according to the present embodiment respectively detects the position and relative speed of another vehicle (object) traveling around the vehicle using the millimeter wave radar 15.

In the vehicle control device 1 according to the present embodiment, an object such as another vehicle ahead of the vehicle 2 is detected and an anti-collision control is performed under conditions where there is a risk of the vehicle 2 crashing with the object.

The anti-collision control will be briefly explained here. In the anti-collision control, it is first determined from a running state of the vehicle and surrounding conditions whether a collision with an object can be avoided by a steering operation of the vehicle 2. If it is determined that a collision with the object can be avoided by a steering operation, then the AT 5 is not shifted and a steering operation to avoid the object is recommended to the driver. Meanwhile, if it is determined that a collision with the object cannot be avoided by a steering operation, then a braking control of the vehicle 2 is performed wherein the AT 5 is shifted down and the brakes 6A to 6D are operated.

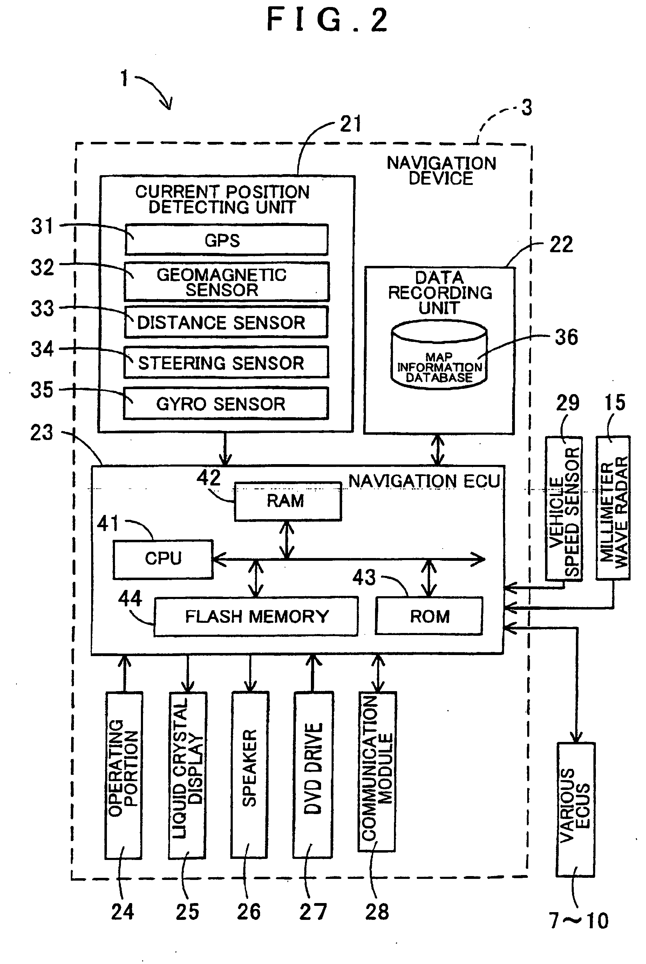

Next, the navigation device 3 structuring the above vehicle control device 1 will be described in detail using FIG 2. FIG 2 is a block diagram schematically showing a control system of a navigation device 3 according to the present embodiment.

As FIG 2 illustrates, the navigation device 3 according to the present embodiment is structured from the following: a current position detecting unit 21 that detects a current position of the host vehicle; a data recording unit 22 in which various data is recorded; a navigation ECU (a vehicle speed obtaining unit, an object distance obtaining unit, a collision judgment unit, an avoidance judgment unit, and a braking control unit) 23 that performs various computational processings based on input information; an operating portion 24 that accepts an operation from a user; a liquid crystal display 25 that shows a map around the host vehicle for the user; a speaker 26 that outputs voice guidance related to route guidance; a DVD drive 27 that reads out a DVD serving as a storage medium which stores a program; and a communication module 28 that enables communication with an information center such as a traffic information center. The navigation ECU 23 is also connected with a vehicle speed sensor 29 that detects a travel speed of the host vehicle and the millimeter wave radar 15 described earlier.

The structural components forming the navigation device 3 will be explained in order below.

The current position detecting unit 21 is formed from a GPS 31, a geomagnetic sensor 32, a distance sensor 33, a steering sensor 34, a gyro sensor 35 serving as an orientation detecting unit, an altimeter (not shown), and the like, and is capable of detecting an orientation, current position, and so forth of the host vehicle.

The data recording unit 22 is provided with a hard disk (not shown) that serves as an external storage device and a recording medium, as well as a recording head (not shown) that serves as a driver for reading a map information database 36 and a predetermined program or the like stored on the hard disk, and for writing predetermined data on the hard disk.

Here, the map information database 36 stores various map data required for route guidance, traffic information guidance, and map display. Specifically, the map information database 36 is formed from link data pertaining to a road (link) configuration, node data pertaining to node points, road attribute data pertaining to road attributes, facility data pertaining to facilities such as restaurants and parking lots, intersection data pertaining to intersections, search data for searching a route, search data for searching a point, and image drawing data for drawing an image of a map, a road, traffic information, and so forth on the liquid crystal display 25. Note that the road attribute data includes information related to, for example, whether a road is one-way, the number of lanes on a road, a traffic lane width, a sidewalk width, and whether there is a center divider.

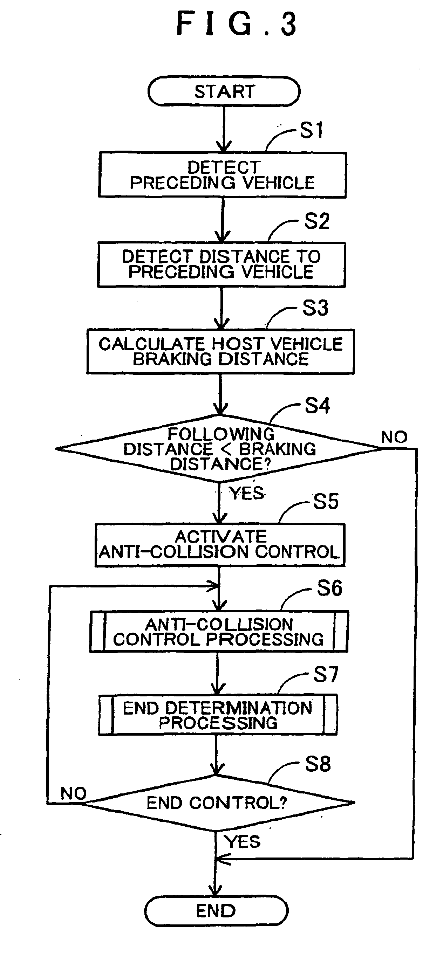

The navigation electronic control unit (ECU) 23 is an electronic control unit that performs overall controls of the navigation device 3 such as guidance route setting processing that, when a destination is selected, sets a guidance route from the current position to the destination, in addition to the anti-collision control and the like. Furthermore, the navigation ECU 23 is provided with a CPU 41 serving as a computing device and a control device, as well as internal memory devices such as the following: a RAM 42 that is used as a working memory when the CPU 41 performs various computational processing, and that also stores route data and the like when a route is searched; a ROM 43 that stores a control program and a vehicle control processing program (see FIGS. 3 to 6); and a flash memory 44 that records a program read out from the ROM 43.

The operating portion 24 is operated when inputting a place of departure that serves as a guidance start point and a destination that serves as a guidance end point, and is formed from a plurality of operation switches (not shown) that includes various keys and buttons. Based on switch signals output from the pressing of the switches or the like, the navigation ECU 23 performs controls in order to execute various corresponding operations. Note that the operating portion 24 can also be formed by a touch panel provided on a front screen of the liquid crystal display 25.

The liquid crystal display 25 shows a road-including map image, traffic information, operation guidance, an operation menu, key guidance, a guidance route from the current position to the destination, guidance information along the guidance route, as well as news, a weather forecast, the time of day, mail, and television programs. In the navigation device 3 according to the present embodiment in particular, during the anti-collision control, the liquid crystal display 25 shows a caution that recommends an avoidance operation and a caution that the braking control will be executed.

The speaker 26 outputs traffic information guidance and voice guidance that guides travel along the guidance route based on a command from the navigation ECU 23. In the navigation device 3 according to the present embodiment in particular, during the anti-collision control, the speaker 26 outputs voice guidance that recommends an avoidance operation and voice guidance that the braking control will be executed.

The DVD drive 27 is a drive capable of reading data recorded on a recording medium such as a DVD or a CD. Based on the readout data, updating of the map information database 36 and the like is performed.

The communication module 28 is a communication apparatus for receiving traffic information formed from information that includes congestion information, regulatory information, and traffic accident information sent from a VICS (registered trademark: Vehicle Information and Communication System) center, a probe center, or the like. The communication module 28 corresponds to a mobile phone or a DCM, for example.

The vehicle speed sensor 29 is a sensor for detecting a moving distance of the vehicle and a vehicle speed. The vehicle speed sensor 29 generates a pulse in response to a rotation of the vehicle wheel, and outputs a pulse signal to the navigation ECU 23. The navigation ECU 23 then calculates the moving distance based on the counted number of generated pulses.

Next, a vehicle control processing program executed by the navigation ECU 23 in the vehicle control device 1 having the above configuration will be explained based on FIGS. 3 to 6. FIG 3 is a flowchart of the vehicle control processing program according to the present embodiment. Here, the vehicle control processing program is repeatedly executed at a predetermined interval (e.g. 200 milliseconds) after an ignition of the vehicle is switched on, and is a program that performs an AT control based on whether avoidance of an object is possible after the object (e.g. another vehicle) is detected ahead in the travel direction of the vehicle. Note that the programs below shown in the flowcharts of FIGS. 3 to 6 are stored in the RAM 42 and the ROM 43 and executed by the CPU 41. The below embodiments describe examples in which a preceding vehicle in particular traveling ahead in the travel direction of the vehicle is detected as an object.

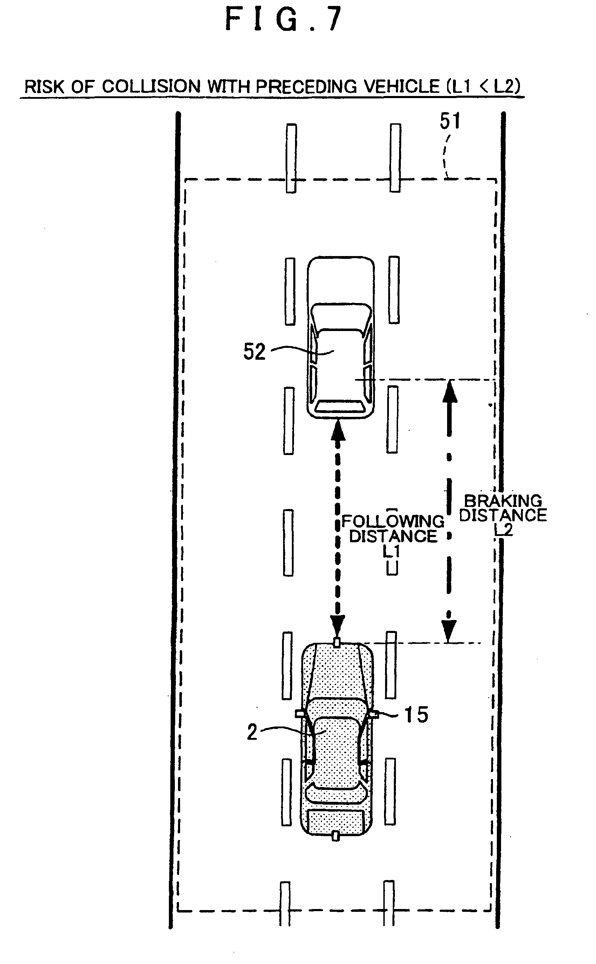

In the vehicle control processing program, first, the CPU 41 at step (abbreviated to "S" below) 1 detects a preceding vehicle (object) at a position ahead in the travel direction of the host vehicle. Note that the detection of the preceding vehicle is performed using the millimeter wave radar 15. Here, the millimeter wave radar 15 is installed at a total of four locations, front, rear, right, and left surfaces, of the vehicle 2 as illustrated in FIG 7, and the millimeter wave radar 15 is capable of detecting a position and relative speed of a target within a recognition range 51 around the host vehicle 2. As shown in FIG 7 for example, when there is a vehicle 52 traveling within the recognition range 51 of the millimeter wave radar 15 and in the same lane as the host vehicle 2, then the vehicle 52 is detected as a preceding vehicle at S1.

Next at S2, the CPU 41 detects a distance from the host vehicle to the preceding vehicle detected at S1 (namely, a following distance L1) using the millimeter wave radar 15. In the example shown in FIG 7, a distance from the host vehicle 2 to the preceding vehicle 52 is detected as the following distance L1. Note that S2 corresponds to the processing of the object distance obtaining unit.

At S3 the CPU 41 detects the vehicle speed of the host vehicle using the vehicle speed sensor 29, and calculates a braking distance L2 of the host vehicle based on the detected vehicle speed. Here, the braking distance refers to a distance that the vehicle travels after the driver starts braking by pressing the brake pedal 12 until the vehicle comes to a complete stop. Further note that the calculation method of the braking distance L2 is already known and therefore not explained here. Moreover, the braking distance L2 varies depending on the day's weather, a tire wear condition, a road inclination, and the like, and the navigation device 3 is preferably structured so as to obtain such information in advance. Note that S3 corresponds to the processing of the vehicle speed obtaining unit.

Subsequently at S4 the CPU 41 compares the following distance L1 to the preceding vehicle detected at S2 and the braking distance L2 of the host vehicle calculated at S3, and determines whether the following distance L1 is shorter than the braking distance L2.

Consequently, if it is determined that the following distance L1 is shorter than the braking distance L2 of the host vehicle as shown in FIG 7 (YES at S4), then the CPU 41 determines that there is a risk of collision between the host vehicle and the preceding vehicle, and the routine proceeds to S5. At S5 the CPU 41 activates the anti-collision control. Note that the anti-collision control is a control that determines in advance a collision between the traveling vehicle and an object, and attempts to mitigate damage by operating safety equipment. In the present embodiment, the anti-collision control is a control of the AT 5 that especially considers the possibility of a collision with an object.

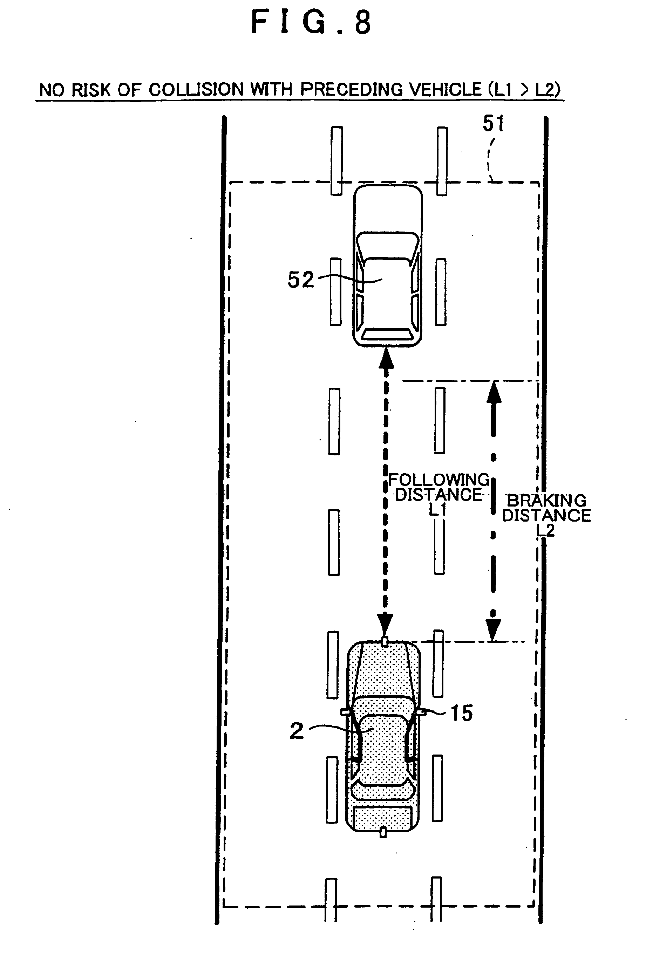

Meanwhile, if it is determined that the following distance L1 is longer than the braking distance L2 of the host vehicle as shown in FIG 8 (NO at S4), then the CPU 41 determines that there is no risk of collision between the host vehicle and the preceding vehicle. The anti-collision control is not activated and the vehicle control processing is ended. Note that S4 corresponds to the processing of the collision judgment unit.

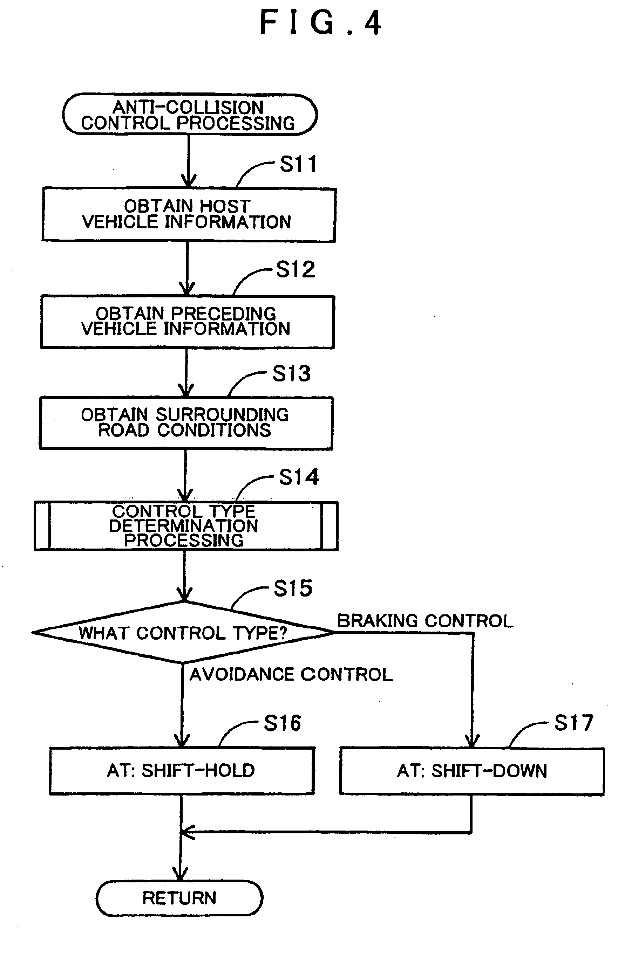

Next at S6, the CPU 41 executes anti-collision control processing described later (FIG. 4). Note that the anti-collision control processing is processing that determines whether a collision between the host vehicle and the preceding vehicle can be avoided by a steering operation and performs a control of the AT 5 based on the determination result.

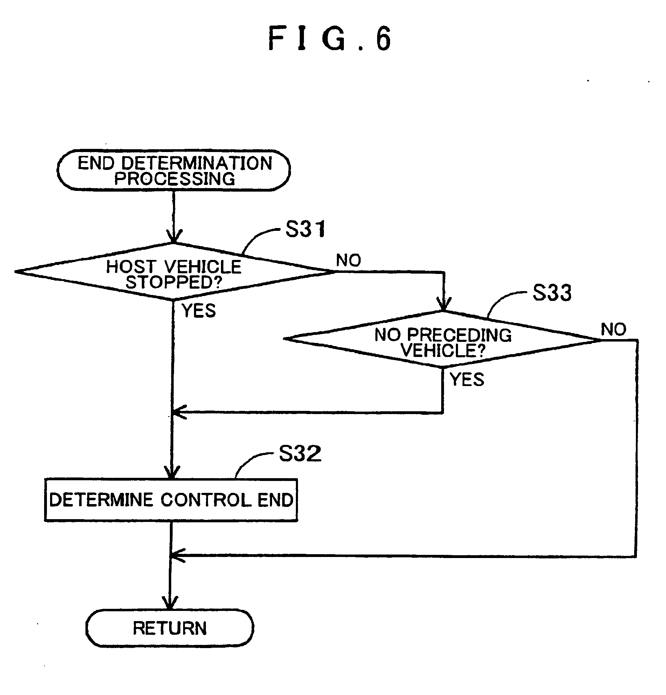

Next at S7, the CPU 41 executes end determination processing described later (FIG 6). Note that the end determination processing is processing that determines whether the risk of a collision between the host vehicle and the preceding vehicle has been eliminated as a result of performing the anti-collision control.

At S8 it is determined whether to end the anti-collision control based on the result of the end determination processing at S7. Specifically, if it is determined at S7 that the risk of a collision between the host vehicle and the preceding vehicle is eliminated, then the anti-collision control is ended; if it is determined that the risk of a collision between the host vehicle and the preceding vehicle is not eliminated, then it is judged that the anti-collision control should be continued.

If it is judged that the anti-collision control should be continued as a result of the determination at S8 (NO at S8), then the routine returns to S6 and the anti-collision control is continued. On the other hand, if it is determined that the anti-collision control should be ended (YES at S8), then the vehicle control processing is ended.

A subroutine of the anti-collision control processing at S6 will be explained next based on FIG 4. FIG 4 is a flowchart of a subroutine program in the anti-collision control processing.

At S11 the CPU 41 first obtains host vehicle information pertaining to the host vehicle. Here, the host vehicle information obtained at S 11 includes the current position, travel direction, vehicle speed, and lane position of the host vehicle. Note that regarding the current position of the host vehicle, a detection result of the GPS 31 and map-matching processing employing the map data stored in the map information database 36 are used to identify the current position of the host vehicle on a map. The travel direction and the vehicle speed of the host vehicle are detected using the gyro sensor 35 and the vehicle speed sensor 29. In addition, the lane position in which the host vehicle is traveling is identified based on an image taken by the rear camera 14.

The processing for identifying the lane position in which the host vehicle is traveling will be briefly described below. First the CPU 41 performs image recognition processing of a lane marker and a center divider from an image taken by the rear camera 14. Based on the result of the image recognition processing, the existence of a lane marker and a center divider, as well as the type of lane marker are detected. Next the traffic lane in which the host vehicle is traveling is identified based on the detected lane marker and center divider, and the configuration of the road in which the host vehicle is currently traveling as obtained from the map information database 36. Note that if the road in which the host vehicle is traveling has only one lane, then there is no need to performing the processing pertaining to identification of the lane position.

At S12 the CPU 41 next obtains preceding vehicle information pertaining to the preceding vehicle. Here, the preceding vehicle information obtained at S12 includes the following distance L1 detected at S2 from the host vehicle to the preceding vehicle and the relative speed of the preceding vehicle with respect to the host vehicle. Note that the detection of the relative speed of the preceding vehicle is performed using the millimeter wave radar 15.

At S 13 the CPU 41 obtains the surrounding road conditions of the host vehicle. Here, the surrounding road conditions obtained at S 13 include the condition of an adjacent lane that is next to the lane in which the host vehicle is currently traveling. Specifically, information (including the position and relative speed) pertaining to an object such as another vehicle traveling in the adjacent lane or a sign placed within the adjacent lane is obtained. Note that the detection of the surrounding road conditions is performed using the front camera 13, the rear camera 14, and the millimeter wave radar 15.

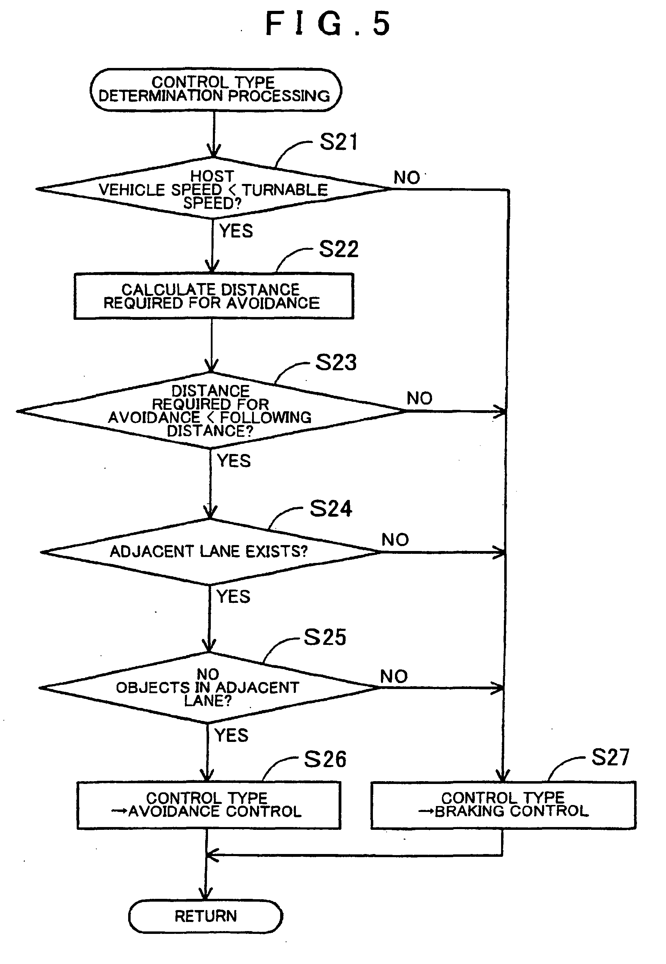

Next at S 14, the CPU 41 performs control type determination processing described later (FIG. 5). Note that the control type determination processing is processing that determines the appropriate type of control to be performed by the anti-collision control: (a) an avoidance control that recommends an avoidance maneuver to the driver in order to prevent a collision with an object, and (b) a braking control for deceleration in order to mitigate an impact upon collision with an object.

At S15 the CPU 41 determines whether either (a) the avoidance control or (b) the braking control has been selected as a result of the control type determination processing at S 14.

If (a) the avoidance control has consequently been selected, then the CPU 41 performs a shift-hold control that fixes a transmission gear ratio of the AT 5 via the AT ECU 8 (S16). Thus, even when the vehicle performs an avoidance maneuver as a result of steering by the driver, there is no down-shifting during the avoidance maneuver, thereby suppressing skidding or the like of the vehicle. It is also preferable that at S 16 a caution regarding the execution of an avoidance maneuver is simultaneously conveyed using the liquid crystal display 25 and the speaker 26. Note that in addition to the caution regarding the execution of an avoidance maneuver, guidance regarding a steering direction may also be provided. Furthermore, an automatic control for steering assistance may also be performed.

Meanwhile, if (b) the braking control has consequently been selected, then the CPU 41 performs a shift-down control that increases the transmission gear ratio of the AT 5 via the AT ECU 8 (S17). Thus, even if a collision with the object cannot be avoided, it is possible to mitigate an impact upon collision due to braking of the vehicle generated by an engine brake. At S 17 the braking control is preferably performed simultaneously by the brakes 6A to 6D. It is also preferable that a caution regarding the execution of the braking control is conveyed using the liquid crystal display 25 and the speaker 26. Note that S17 corresponds to the processing of the braking control unit.

A subroutine of the control type determination processing at S 14 will be explained next based on FIG 5. FIG 5 is a flowchart of a subroutine program in the control type determination processing.

At S21 the CPU 41 first determines whether the vehicle speed of the host vehicle obtained at S 11 is less than a turnable speed. Note that the turnable speed is a speed at which the vehicle can safely turn, and is set as a parameter per vehicle.

If it is determined that the vehicle speed of the host vehicle is less than the turnable speed (YES at S21), then the routine proceeds to S22. Meanwhile, if it is determined that the vehicle speed of the host vehicle is equal to or greater than the turnable speed (NO at S21), then it is dangerous for the vehicle to perform an avoidance maneuver. Therefore, it is determined that the braking control for deceleration in order to mitigate an impact upon collision with the object is appropriate as the type of control performed by the anti-collision control (S27).

At S22 the CPU 41 calculates a distance required to avoid the preceding vehicle (hereinafter referred to as a required avoidance distance L3) based on the host vehicle information obtained at S11 and the preceding vehicle information obtained at S12.

Subsequently at S23 the CPU 41 compares the required avoidance distance L3 obtained at S22 and the following distance L1 to the preceding vehicle, and determines whether the required avoidance distance L3 is shorter than the following distance L1.

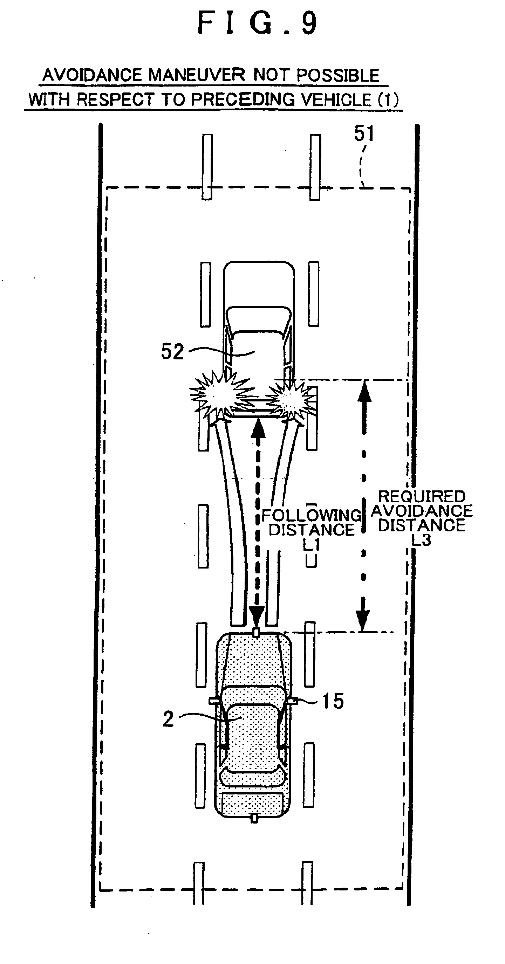

If it is determined that the required avoidance distance L3 is shorter than the following distance L1 (YES at S23), then the routine proceeds to S24. Meanwhile, if it is determined that the required avoidance distance L3 is longer than the following distance L1 at illustrated in FIG 9 (NO at S23), then contact with the preceding vehicle cannot be avoided. Therefore, it is determined that the braking control for deceleration in order to mitigate an impact upon collision with the object is appropriate as the type of control performed by the anti-collision control (S27). Note that, when the preceding vehicle information has not been obtained in step S12, the CPU 41 determines in step S23 that the required avoidance distance L3 is longer than the following distance L1 as illustrated in Fig. 9 (NO in S23).

At S24 the CPU 41 determines whether there is a lane adjacent to the lane in which the host vehicle is currently traveling based on road information pertaining to the road on which the host vehicle is currently traveling. If it is determined that there is an adjacent lane (YES at S24), then the routine proceeds to S25. Meanwhile, if it is determined that no adjacent lane exists (NO at S24), then the preceding vehicle cannot be avoided. Therefore, it is determined that the braking control for deceleration in order to mitigate an impact upon collision with the object is appropriate as the type of control performed by the anti-collision control (S27).

At S25 the CPU 41 determines whether there is an object (e.g. a vehicle, sign, or the like) at a distance closer than the preceding vehicle in an adjacent lane next to the lane in which the host vehicle is currently traveling based on the surrounding road conditions obtained at S 13.

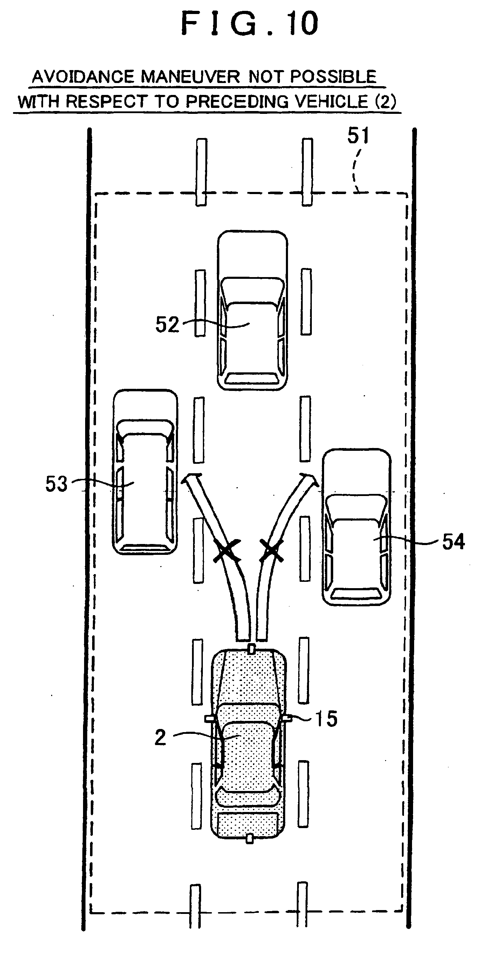

Thus, if it is determined that there is an object at a distance closer than the preceding vehicle in all adjacent lanes (NO at S25), then routes for avoiding the preceding vehicle are blocked by the objects, making contact with the preceding vehicle unavoidable. Therefore, it is determined that the braking control for deceleration in order to mitigate an impact upon collision with the object is appropriate as the type of control performed by the anti-collision control (S27). In the example illustrated in FIG. 10 for example, there is a vehicle 53 in a left adjacent lane between the host vehicle 2 and the preceding vehicle 52, and there is a vehicle 54 in a right adjacent lane between the host vehicle 2 and the preceding vehicle 52. Thus, the vehicle 53 blocks a route in which the host vehicle 2 moves to the left in order to avoid the preceding vehicle 52, and the vehicle 54 blocks a route in which the host vehicle 2 moves to the right in order to avoid the preceding vehicle 52. In such cases, the braking control is selected as the type of control performed by the anti-collision control.

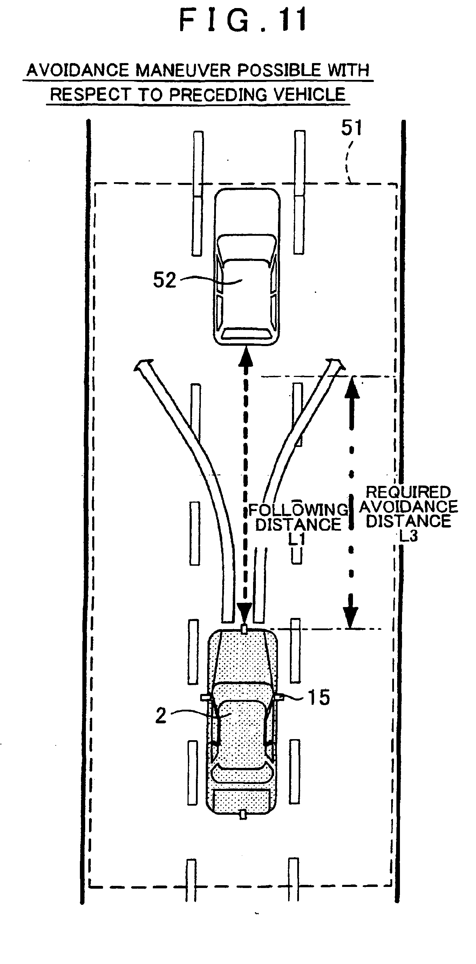

On the other hand, if it is determined that no object exists at a distance closer than the preceding vehicle in at least one adjacent lane (YES at S25), then in the adjacent lane without an object a route for avoiding the preceding vehicle is not blocked by an object, and contact with the preceding vehicle is avoidable through a steering operation. Therefore, it is determined that the avoidance control that recommends an avoidance maneuver to the driver is appropriate as the type of control performed by the anti-collision control (S26). For example, in FIG. 11 there is no object between the host vehicle 2 and the preceding vehicle 52 in the right and left adjacent lanes, and the required avoidance distance L3 is shorter than the following distance L1. It is thus possible to avoid the preceding vehicle 52 through a steering operation. Note that S21 to S25 correspond to the processing of the avoidance judgment unit.

In cases where the host vehicle is approaching an object ahead, the following two methods here can be used in order to avoid contact with the object.
(1) Maintain a distance from the object without contacting the object by performing vehicle braking while keeping to the current direction of vehicle travel.
(2) Perform an avoidance maneuver by steering to change the travel direction of the host vehicle and moving the vehicle to the right or left of the object.
   Comparing the above methods (1) and (2), in order to avoid contact with the object according to method (1), the driver must initiate a vehicle operation in order to avoid impact at a faster timing than that required to avoid contact with the object according to method (2).

According to related art (see Japanese Patent Application Publication No. JP-A-2007145152 for an example), if it is determined that contact with an object is unavoidable even with method (2), namely, if contact with an object cannot be avoided regardless of any vehicle operation performed, then a braking control is initiated. In related art it is further determined whether contact with the object is avoidable according to method (2), based on the relative speed and the positional relationship between the host vehicle and the object as described above, that is, based only on relative relationships between the host vehicle and the object.

However, the vehicle cannot avoid an object ahead by moving into the right or left adjacent lane if conditions do not allow such an avoidance maneuver, such as when there is no adjacent lane next to the lane in which the vehicle is traveling, or if there is an adjacent lane next to the lane in which the vehicle is traveling, there is another object (e.g. a traveling vehicle) in the adjacent lane. If a determination is made based solely on a relative relationship between the host vehicle and the object as in the related art, then it is impossible to determine that the vehicle is in a situation where contact with the object cannot be avoided by steering as described above.

Hence, in the present embodiment, by using information regarding whether there is an adjacent lane next to the lane in which the vehicle is traveling and whether there is an object in the adjacent lane, the determination processing at S24 and S25 is added so that it can be determined whether the vehicle is in a situation where contact with the object cannot be avoided by steering. As a consequence, the timing at which the braking control (S 17) is initiated can be advanced, making it possible to reduce an impact upon contact with an object.

A sub-routine of the end determination processing at S7 will be explained next based on FIG. 6. FIG. 6 is a flowchart of a sub-routine program in the end termination processing.

At S31 the CPU 41 first determines whether the host vehicle is stopped using the vehicle speed sensor 29. If it is determined that the host vehicle is stopped (YES at S31), then there is no risk of the host vehicle subsequently contacting an object. Therefore, ending of the anti-collision control is determined (S32).

Meanwhile, if it is determined that the host vehicle is traveling (NO at S31), then it is further determined at S33 whether there is a preceding vehicle within the recognition range 51 of the millimeter wave radar 15. In particular, the CPU 41 determines whether preceding vehicle information has been obtained in step S21. Thus, if it is determined that there is no preceding vehicle within the recognition range 51 of the millimeter radar 15, that is, if preceding vehicle information has not been obtained in step S21 (YES at S33), then the risk of a collision between the host vehicle and a preceding vehicle is considered eliminated as a result of performing the anti-collision control, and ending of the anti-collision control is determined (S32). The routine subsequently proceeds to S8.

On the other hand, if it is determined that there is a preceding vehicle within the recognition range 51 of the millimeter radar 15, that is, if preceding vehicle information has been obtained in step S21 (NO at S33), then the risk of a collision between the host vehicle and a preceding vehicle is not eliminated. Continuation of the anti-collision control is determined, and the routine proceeds to S8.

As described in detail above, according to the vehicle control device 1, the vehicle control method used by the vehicle control device 1, and the computer program executed by the vehicle control device 1 of the present embodiment, if a preceding vehicle is detected ahead traveling in the travel direction of the vehicle (S1), then the following distance to the preceding vehicle is detected (S2), and the braking distance of the host vehicle is calculated (S3). If a risk of collision between the host vehicle and the preceding vehicle is determined, then the anti-collision control is performed (S6). In the anti-collision control, it is determined whether a collision with the preceding vehicle can be avoided through a steering operation by taking into consideration the host vehicle information, the preceding vehicle information, and the surrounding road conditions (S21 to S27). If avoidance is determined as possible, then the shift-hold control is applied to the AT 5 (S 16), whereas if avoidance is determined as impossible, then the shift-down control is applied to the AT 5 (S 17). Therefore, skidding or the like can be suppressed during an avoidance maneuver performed by the host vehicle 2. Accordingly, the preceding vehicle can be surely avoided with the behavior of the host vehicle 2 stabilized, thereby enabling safe driving.

Moreover, by comparing the braking distance calculated based on the vehicle speed of the host vehicle 2 and the distance to the preceding vehicle (S4), it is possible to accurately determine whether there is a risk of collision between the vehicle and the object.

Taking into consideration the vehicle traveling in an adjacent lane also makes it possible to know whether an avoidance route to an adjacent lane can be secured for the host vehicle 2 to avoid the object (S25). Using the result found regarding whether an avoidance route can be secured enables a more accurate determination as to whether a collision between the host vehicle 2 and the preceding vehicle can be avoided through a steering operation.

Also, using information pertaining to adjacent lanes makes it possible to determine situations where contact with an object is unavoidable through steering, i.e., whether the vehicle is in a situation where contact with an object cannot be avoided regardless of any vehicle operation subsequently performed (S24, S25). As a consequence, the timing at which the braking control (S 17) is initiated can be advanced, making it possible to reduce an impact upon contact with an object.

If no adjacent lane exists next to the lane in which the vehicle is traveling, then it is determined that a collision between an object and the vehicle is unavoidable, and if there is an adjacent lane next to the lane in which the vehicle is traveling but there is another object in the adjacent lane, then it is also determined that a collision between the object and the vehicle is unavoidable. Therefore, a more accurate and prompt determination regarding whether contact with an object is avoidable through steering can be performed than in the past.

Note that the present invention is not limited to the above embodiment, and various improvements and modifications are naturally possible within the scope of the present invention.

The present embodiment describes an example in which a preceding vehicle in particular traveling ahead in the travel direction of the vehicle is detected as an object. However, the object may be something other than a preceding vehicle. The object may instead correspond to a person, a bicycle, a guardrail, or the like.

Furthermore, in the present embodiment, the navigation ECU 23 provided in the navigation device 3 executes the vehicle control processing program shown in FIGS. 3 to 6. However, the vehicle control processing program may be executed instead by the engine ECU 7, the AT ECU 8, the brake ECU 9, or the like. Processing may also be divided and performed by a plurality of ECUs.

## Claims

1. A vehicle control device (1), comprising
a vehicle speed obtaining unit (29) that is adapted to obtain a vehicle speed of a vehicle (2),
an object distance obtaining unit (15) that is adapted to obtain a distance (L1) to an object (52) ahead of the vehicle (2),
a collision judgment unit (23) that is adapted to determine whether there is a risk of a collision between the object (52) and the vehicle (2) based on the vehicle speed and the distance to the object,
a vehicle speed judgment unit (23) that, following a determination by the collision judgment unit that there is a risk of a collision between the object (52) and the vehicle (2), is adapted to determine whether the vehicle speed of the vehicle is less than a turnable speed, the turnable speed is a speed at which the vehicle can safely turn,
an avoidance judgment unit (23) that, following a determination by the vehicle speed judgment unit that the vehicle speed of the vehicle is less than the turnable speed, is adapted to determine whether the collision between the object and the vehicle can be avoided through a steering operation based on whether there is an adjacent lane next to a lane in which the vehicle (2) is traveling, and
a braking control unit (23) that is adapted to perform a braking control for decelerating the vehicle, following a determination by the vehicle speed judgment unit that the vehicle speed of the vehicle is equal to or greater than the turnable speed, or following a determination by the avoidance judgment unit that a collision between the object and the vehicle cannot be avoided by a steering operation.

2. The vehicle control device according to claim 1, wherein
the avoidance judgment unit (23) is adapted to
determine that a collision between the object (52) and the vehicle (2) is unavoidable if there is no adjacent lane next to the lane in which the vehicle is traveling, and
determine that a collision between the object and the vehicle is unavoidable if there is an adjacent lane next to the lane in which the vehicle is traveling but there is another object in the adjacent lane.

3. A vehicle control method comprising the steps of:
obtaining a vehicle speed of a vehicle (2);
obtaining a distance (L1) to an object (52) ahead of the vehicle (2);
performing a collision judgement by determining whether there is a risk of a collision between the object (52) and the vehicle (2) based on the vehicle speed and the distance (L1) to the object;
following a determination at the collision judgement step that there is a risk of a collision between the object (52) and the vehicle (2), performing a vehicle speed judgment by determining whether the vehicle speed of the vehicle (2) is less than a turnable speed, the turnable speed is a speed at which the vehicle can safely turn,
following a determination at the vehicle speed judgement step that the vehicle speed of the vehicle (2) is less than the turnable speed, performing an avoidance judgment by determining whether the collision between the object and the vehicle can be avoided through a steering operation based on whether there is an adjacent lane next to a lane in which the vehicle is traveling; and
performing a braking control for decelerating the vehicle following a determination by the vehicle speed judgment step that the vehicle speed of the vehicle (2) is equal or greater that the turnable speed, or following a determination at the avoidance judgment step that a collision between the object and the vehicle (2) cannot be avoided by a steering operation.

4. A computer program including program code which, when run in a computer, performs the steps of the method of claim 3.

## Patentansprüche

1. Fahrzeugsteuergerät (1), mit
einer Fahrzeuggeschwindigkeitserhalteeinheit (29), die zum Erhalten einer Fahrzeuggeschwindigkeit eines Fahrzeugs (2) angepasst ist,
einer Objektabstandserhalteeinheit (15), die zum Erhalten eines Abstands (L1) zu einem Objekt (52) vor dem Fahrzeug (2) angepasst ist,
einer Kollisionsbeurteilungseinheit (23), die zum Bestimmen, ob es ein Risiko einer Kollision zwischen dem Objekt (52) und dem Fahrzeug (2) gibt, basierend auf der Fahrzeuggeschwindigkeit und dem Abstand zu dem Objekt angepasst ist,
einer Fahrzeuggeschwindigkeitsbeurteilungseinheit (23), die einer Bestimmung durch die Kollisionsbeurteilungseinheit, dass es ein Risiko einer Kollision zwischen dem Objekt (52) und dem Fahrzeug (2) gibt, folgend zum Bestimmen, ob die Fahrzeuggeschwindigkeit des Fahrzeugs geringer als eine Ausweichgeschwindigkeit ist, angepasst ist, wobei die Ausweichgeschwindigkeit eine Geschwindigkeit ist, bei der das Fahrzeug sicher ausweichen kann,
einer Vermeidungsbeurteilungseinheit (23), die einer Bestimmung durch die Fahrzeuggeschwindigkeitsbeurteilungseinheit, dass die Fahrzeuggeschwindigkeit des Fahrzeugs geringer als die Ausweichgeschwindigkeit ist, folgend zum Bestimmen, ob die Kollision zwischen dem Objekt und dem Fahrzeug durch eine Lenkbetätigung vermieden werden kann, basierend darauf, ob es eine benachbarte Fahrspur neben einer Fahrspur, auf der das Fahrzeug (2) fahrt, gibt, angepasst ist, und
einer Bremssteuerungseinheit (23), die zum Durchführen einer Bremssteuerung zum Verzögern des Fahrzeugs einer Bestimmung durch die Fahrzeuggeschwindigkeitsbeurteilungseinheit, dass die Fahrzeuggeschwindigkeit des Fahrzeugs gleich oder größer als die Ausweichgeschwindigkeit ist, folgend, oder einer Bestimmung durch die Vermeidungsbeurteilungseinheit, dass eine Kollision zwischen dem Objekt und dem Fahrzeug nicht durch eine Lenkbetätigung vermieden werden kann, folgend, angepasst ist.

2. Fahrzeugsteuergerät nach Anspruch 1, bei dem
die Vermeidungsbeurteilungseinheit (23) angepasst ist, zum
Bestimmen, dass eine Kollision zwischen dem Objekt (52) und dem Fahrzeug (2) unvermeidbar ist, falls es keine benachbarte Spur neben der Spur, auf der das Fahrzeug fährt, gibt,
Bestimmen, dass eine Kollision zwischen dem Objekt und dem Fahrzeug unvermeidbar ist, falls es eine benachbarte Spur neben der Spur, auf der das Fahrzeug fährt, gibt, es aber ein anderes Objekt auf der benachbarten Spur gibt.

3. Fahrzeugsteuerungsverfahren mit folgenden Schritten
Erhalten einer Fahrzeuggeschwindigkeit eines Fahrzeugs (2),
Erhalten eines Abstands (L1) zu einem Objekt (52) vor dem Fahrzeug (2), Durchführen einer Kollisionsbeurteilung durch Bestimmen, ob es ein Risiko einer Kollision zwischen dem Objekt (52) und dem Fahrzeug (2) basierend auf der Fahrzeuggeschwindigkeit und dem Abstand (L1) zu dem Objekt gibt,
Durchführen einer Fahrzeuggeschwindigkeitsbeurteilung einer Bestimmung in dem Kollisionsbeurteilungsschritt, dass es ein Risiko einer Kollision zwischen dem Objekt (52) und dem Fahrzeug (2) gibt, folgend, durch Bestimmen, ob die Fahrzeuggeschwindigkeit des Fahrzeugs (2) geringer als eine Ausweichgeschwindigkeit ist, wobei die Ausweichgeschwindigkeit eine Geschwindigkeit ist, mit der das Fahrzeug sicher ausweichen kann,
Durchführen einer Vermeidungsbeurteilung einer Bestimmung in dem Fahrzeuggeschwindigkeitsbeurteilungsschritt, dass die Fahrzeuggeschwindigkeit des Fahrzeugs (2) geringer als die Ausweichgeschwindigkeit ist, folgend, durch Bestimmen, ob die Kollision zwischen dem Objekt und dem Fahrzeug durch eine Lenkbetätigung vermieden werden kann, basierend darauf, ob es eine benachbarte Spur neben einer Spur, auf der das Fahrzeug fährt, gibt, und
Durchführen einer Bremssteuerung zum Verzögern des Fahrzeugs einer Bestimmung durch den Fahrzeuggeschwindigkeitsbeurteilungsschritt, dass die Fahrzeuggeschwindigkeit des Fahrzeugs (2) gleich oder größer der Ausweichgeschwindigkeit ist, folgend oder einer Bestimmung in dem Vermeidungsbeurteilungsschritt, dass eine Kollision zwischen dem Objekt und dem Fahrzeug (2) nicht durch eine Lenkbetätigung vermieden werden kann, folgend.

4. Computerprogramm enthaltend einen Programmcode, der, wenn er in einem Computer ausgeführt wird, die Schritte des Verfahrens nach Anspruch 3 durchführt.

## Revendications

1. Dispositif de commande de véhicule (1), comprenant :
une unité (29) d'obtention de la vitesse du véhicule qui est à même d'obtenir une vitesse d'un véhicule (2),
une unité (15) d'obtention de la distance à un objet qui est à même d'obtenir une distance (L1) à un objet (52) situé devant le véhicule (2),
une unité (23) de jugement de collision qui est à même de déterminer s'il y a un risque de collision entre l'objet (52) et le véhicule (2) sur la base de la vitesse du véhicule et de la distance à l'objet,
une unité (23) de jugement de la vitesse du véhicule qui, après une détermination par l'unité de jugement de collision qu'il y a un risque de collision entre l'objet (52) et le véhicule (2), est à même de déterminer si la vitesse du véhicule est inférieure à une vitesse de rotation, la vitesse de rotation étant la vitesse à laquelle le véhicule peut tourner en toute sécurité,
une unité (23) de jugement d'évitement qui, après une détermination par l'unité de jugement de vitesse du véhicule que la vitesse du véhicule est inférieure à la vitesse de rotation, est à même de déterminer si la collision entre l'objet et le véhicule peut être évitée par une manoeuvre de pilotage basée sur le fait qu'il y ait ou non une voie adjacente à côté d'une voie dans laquelle le véhicule (2) se déplace, et
une unité (23) de commande de freinage qui est à même d'effectuer une commande de freinage pour décélérer le véhicule, après une détermination par l'unité de jugement de la vitesse du véhicule que la vitesse du véhicule est égale ou supérieure à la vitesse de rotation ou après une détermination par l'unité de jugement d'évitement qu'une collision entre l'objet et le véhicule ne peut être évitée par une manoeuvre de pilotage.

2. Dispositif de commande de véhicule selon la revendication 1, dans lequel :
l'unité (23) de jugement d'évitement est à même de déterminer qu'une collision entre l'objet (52) et le véhicule (2) est inévitable s'il n'y a pas de voie adjacente à côté de la voie dans laquelle le véhicule se déplace, et
de déterminer qu'une collision entre l'objet et le véhicule est inévitable s'il y a une voie adjacente à côté de la voie dans laquelle le véhicule se déplace, mais qu'il y a un autre objet dans la voie adjacente.

3. Procédé de commande de véhicule, comprenant les étapes consistant à :
obtenir une vitesse du véhicule (2) ;
obtenir une distance (L1) à un objet (52) qui est situé devant le véhicule (2) ;
effectuer un jugement de collision en déterminant s'il y a un risque de collision entre l'objet (52) et le véhicule (2) sur la base de la vitesse du véhicule et de la distance (L1) à l'objet ;
après une détermination émise à l'étape de jugement de collision qu'il y a un risque de collision entre l'objet (52) et le véhicule (2), effectuer un jugement de la vitesse du véhicule en déterminant si la vitesse du véhicule (2) est inférieure à une vitesse de rotation, la vitesse de rotation étant une vitesse à laquelle le véhicule peut tourner en toute sécurité ;
après une détermination émise à l'étape de jugement de la vitesse du véhicule que la vitesse du véhicule (2) est inférieure à la vitesse de rotation, effectuer un jugement d'évitement en déterminant si la collision entre l'objet et le véhicule peut être évitée par une manoeuvre de pilotage sur la base du fait qu'il y ait une voie adjacente à côté d'une voie dans laquelle le véhicule se déplace ; et
effectuer une commande de freinage pour décélérer le véhicule après une détermination émise à l'étape de jugement de la vitesse du véhicule que la vitesse du véhicule (2) est égale ou supérieure à la vitesse de rotation ou après une détermination émise à l'étape de jugement d'évitement qu'une collision entre l'objet et le véhicule (2) ne peut être évitée par une manoeuvre de pilotage.

4. Programme informatique comprenant un code de programme qui, lorsqu'il tourne sur un ordinateur, effectue les étapes du procédé de la revendication 3.
